**Europäisches Patentamt**

**European Patent Office**

**Office européen des brevets**

(19)

(11) Veröffentlichungsnummer: **0 075 255**
**B1**

(12) # EUROPÄISCHE PATENTSCHRIFT

(45) Veröffentlichungstag der Patentschrift:
**23.04.86**

(51) Int. Cl.⁴: **A 01 J 7/00**

(21) Anmeldenummer: **82108474.6**

(22) Anmeldetag: **14.09.82**

(54) **Melkanlage.**

(30) Priorität: **16.09.81 DE 3136841**

(43) Veröffentlichungstag der Anmeldung:
**30.03.83 Patentblatt 83/13**

(45) Bekanntmachung des Hinweises auf die Patenterteilung:
**23.04.86 Patentblatt 86/17**

(84) Benannte Vertragsstaaten:
**AT BE CH FR GB IT LI NL SE**

(56) Entgegenhaltungen:
**EP - A - 0 057 816**
**DE - A - 1 952 924**
**DE - A - 2 916 231**
**FR - A - 2 458 995**
**GB - A - 2 057 845**
**GB - A - 2 062 178**
**US - A - 4 275 759**

(73) Patentinhaber: **Biomelktechnik Hoefelmayr & Co.,**
**Steinwichslenstrasse 20, CH-9052 NiederteufenAR (CH)**

(72) Erfinder: **Hoefelmayr, Tilmann, Dr.,**
**Steinwichslenstrasse 20, CH-9052 Niederteufen AR (CH)**
Erfinder: **Maier, Jakob, Schelmengriesstrasse 1,**
**CH-8939 Türkheim/Allgäu (CH)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath, Maximilianstrasse 58,**
**D-8000 München 22 (DE)**

### Beschreibung

Die Erfindung betrifft eine Melkanlage, bei der die ermolkene Milch mit Hilfe des in der Melkleitung vorhandenen Unterdrucks über eine Steigleitung in die über Euterniveau liegende Melkleitung transportiert wird.

Bei dem Transport von Milch mit Hilfe von Unterdruck über eine längere Strecke und insbesondere über Steigleitungen besteht die Gefahr, dass die Milch ihren ursprünglichen Zustand ändert und sich insgesamt verschlechtert. Dies kann z.B. darauf beruhen, dass während des Transports die dünnen Eiweissmembranen, welche die Fettkügelchen in der Milch umhüllen, mechanisch beschädigt werden und das nunmehr ungeschützte Fett von fettspaltenden Enzymen, sogenannten Lipasen, angegriffen wird. In diesem Fall kommt es zu einer mehr oder weniger starken Abspaltung verschiedener sogenannter freier Fettsäuren (im Englischen Free Fatty Acids = FFA). Hiervon ist besonders die Buttersäure wegen ihres ranzigen Geschmacks zu nennen. Langkettige freie Fettsäuren, wie etwa die Stearinsäure, hingegen können einen mehr seifigen Geschmack in der Milch und in Milchprodukten erzeugen. Bei der Zerstörung der Fettkügelchen bildet sich neben den freien Fettsäuren auch freies Fett, also Fett, das seine Kügelchenstruktur verloren hat und sich physikalisch anders verhält als die unbeschädigten Fettkügelchen. Da freies Fett verstärkt dazu neigt, sich ungleichmässig zu verteilen, wird es schwieriger, eine repräsentative Fettprobe aus der transportierten Milch zu ziehen und das Fett einwandfrei zu separieren.

Der Gehalt an freien Fettsäuren wird meist in Milliäquivalent pro Liter Milch (mequ./l) angegeben. Bei Werten zwischen 1,5 und 2,0 (je nach Zusammensetzung der freien Fettsäuren) ist der Konsument in der Lage, einen Fehlgeschmack der Milch oder der Milchprodukte festzustellen. Bei der von einem Bauernhof abzutransportierenden Milch wird deshalb ein Gehalt an freien Fettsäuren von möglichst nicht über etwa 1,0 mequ./l angestrebt, um noch einen gewissen Spielraum für Einflussgrössen der Molkerei, z.B. ausser- und innerbetrieblichen Milchtransport, Dauer bis zur Pasteurisation usw. zu haben.

Wie bekannt ist, sind Lipasen in der Milch immer vorhanden. Die Erzeugung von freien Fettsäuren ist jedoch äusserst unterschiedlich. So wurde gefunden, dass ein erhöhtes Auftreten von freien Fettsäuren bei der Spätlaktation, besonders hoher Milchleistung, Brunst oder Futterumstellung häufiger anzutreffen sind. Ausserdem hat sich herausgestellt, dass die Wahrscheinlichkeit des Auftretens von freien Fettsäuren bei einem Transport von kuhwarmer Milch wesentlich höher ist, als beim Transport von kalter Milch. Einen gewissen Einfluss auf die Erzeugung freier Fettsäuren scheinen auch die Bedingungen zu haben, unter denen ein maschinelles Melken durchgeführt wird. Insgesamt hängt offenbar der Grad der in der Anlieferungsmilch vorhandenen freien Fettsäuren von einer Vielzahl von Einflussfaktoren ab, wie etwa neben der Empfindlichkeit der Kühe, von der Art und Sorgfalt der Melkroutine, der Qualität der Milchkühlung, der Häufigkeit der Milchabholung, von der Auslegung und dem Wartungszustand der Melkanlage und vielen anderen Faktoren mehr. Entsprechend dem Gewicht und der Kombination dieser Einflussfaktoren findet man in der von einem Bauernhof abgelieferten Milch FFA-Werte von 0,4 bis hinauf über 1,8 mequ./l.

Als ein sehr wichtiger Einzelfaktor hat sich die Art der Melkanlage herausgestellt. Vergleicht man verschiedene moderne Melkanlagentypen gleichhoher Qualität und Auslegung, die unter gleichguten Bedingungen betrieben werden, so stellt sich der durchschnittliche Gehalt an freien Fettsäuren etwa wie folgt dar:

| Typ | mequ./l |
|---|---|
| Eimermelkanlage | 0,45 |
| Rohrmelkanlage mit tiefliegender Melkleitung (oder tiefliegenden Milchmesspokalen) | 0,60 |
| Rohrmelkanlage mit hochliegender Melkleitung (oder hochliegenden Milchmesspokalen) | 0,80 |
| (Milch im Kuheuter) | (0,30) |

Aus diesen Werten wird deutlich, dass ein verhältnismässig starker Anstieg der freien Fettsäuren beim Übergang von einer Rohrmelkanlage mit tiefliegender Melkleitung zu einer solchen mit hochliegender Melkleitung auftritt. Während man mit einer normgerecht ausgelegten und gewarteten Melkanlage mit tiefliegender Melkleitung bei guter Melkroutine auch unter ungünstigen Bedingungen wie Spätlaktation, Fütterungsumstellung usw. kaum in den Grenzbereich von 1 mequ./l kommen kann, geschieht dies auch bei einer modernen Anlage mit hochliegender Melkleitung relativ leicht. Andererseits ist aber gerade der Melkanlagentyp mit hochliegender Milchabführleitung in den klassischen Familienbetrieben mit Anbindestall in den meisten Milch produzierenden Ländern am häufigsten anzutreffen.

Der einzige konstruktionsmässige Unterschied zwischen einer Rohrmelkanlage mit hochliegender und einer solchen mit tiefliegender Melkleitung besteht darin, dass die ermolkene Milch aus dem Sammelstück des Melkzeuges durch einen langen Melkschlauch in die etwa 1,8 bis 2 Meter hochliegende Milchabführleitung mit Hilfe des in der Milchabführleitung herrschenden Unterdrucks hochgefördert wird. Bei der tiefliegenden Milchabführleitung, die etwa in Höhe des Sammelstücks verlegt ist, entfällt dieser Hochtransport der Milch in einem langen Milchschlauch.

Eine Melkmaschine hat an sich eine Doppelaufgabe. Sie muss einerseits die Milch aus der Zitze absaugen und andererseits die Milch vom zitzennahen Bereich in einen Sammelbehälter transportieren. Beide Funktionen werden durch die Saugkraft des in der Milchabführleitung herrschenden Unterdrucks bewerkstelligt. Würde dabei die Milch als zusammenhängende Milchsäule in der Milchabführleitung transportiert werden, würde das Melkvakuum, das an der Zitzenspitze herrscht, und mit dem die Milch aus der Zitze abgesaugt werden soll, insbesondere durch die hydrostatischen Druckverluste mit zunehmendem Milchfluss sehr instabil sein und bis weit unter die Hälfte des Nennvakuums zusammenbrechen. Ein solcher Vorgang würde zu unerträglichen Problemen wie dem Abfallen des Melkzeugs, zu extrem langen Melkzeiten und zu einem sehr schlechten Ausmelken führen. Ausserdem würde das Melkvakuum zusätzlich aufgrund der Pumpwirkung des sich rhythmisch öffnenden und schliessenden Zitzengummis in Verbindung mit den Massenkräften der transportierten Milch extremen zyklischen Schwankungen unterliegen. Die Anwendung eines derartigen Melkvakuums an der Zitze wäre sowohl aus der Sicht der Eutergesundheit wie auch der Melkarbeit völlig unzumutbar. Aus diesen Gründen werden bei jeder modernen Standardmelkmaschine kleine Mengen an Transportluft (ca. 8 Liter pro Minute frei Luft) in das Melkzeug eingespeist. Dadurch wird die zusammenhängende Milchsäule mehr oder weniger stark unterbrochen und damit spezifisch leichter und druckelastisch. Auf diese Weise können die hydrostatischen Druckverluste sowie die zyklischen Vakuumschwankungen an der Zitze auf ein erträgliches Mass reduziert werden; damit werden erst die Voraussetzungen geschaffen, um das praktische Melken, insbesondere in eine ca. 2 Meter hochliegende Melkleitung, überhaupt zu ermöglichen.

Enthält die Rohmilch keine fein verteilte Luft und ist sie möglicherweise noch gekühlt, dann ist eine enorm hohe mechanische Beanspruchung erforderlich, um eine nennenswerte Steigerung des FFA-Gehaltes hervorzurufen. Wird die Transportluft intensiv mit Milch vermischt, kommt es im Hinblick auf den FFA-Gehalt hauptsächlich zu drei Gefahrenpunkten:

1. Die Fettkügelchenmembranen haben in der Grenzschicht zwischen Milch und Luft aufgrund von Oberflächenspannung und Ladungserscheinungen eine stark vermehrte Neigung zum Platzen. Durch feine intensive Zumischung von Luft wird diese Oberfläche um ein Vielfaches vergrössert.

2. Der Luftzusatz vergrössert auch die Strömungsgeschwindigkeit der abgeführten Milch. Hierdurch können unter besonders ungünstigen Verhältnissen, wie sehr grosser Luftzusatz (Lufteinbruch), engen Leitungsquerschnitten, scharfen Übergängen usw., Aufprall- und Scherkräfte zwischen den bewegten Milchteilchen untereinander und zwischen den bewegten Milchteilchen und der Leitungswand auftreten, die so hoch sind, dass eine direkte Zerstörung der Fettkügelchenmembranen möglich wird.

3. Wird lufthaltige Milch durch eine Zentrifugalpumpe ausgeschleust, so erfolgt eine erhebliche Beschädigung der Eiweissmembranen. Hierzu genügen bereits wenige Prozent Luft, die mit blossem Auge nicht sichtbar sind.

Der vorliegenden Erfindung liegt nunmehr die Aufgabe zugrunde, eine Anlage der eingangs erwähnten Art, bei der die Milch auch über Steigleitungen geführt werden muss, anzugeben, mit der die bisher üblichen FFA-Werte wesentlich herabgesetzt werden können.

Zur Erläuterung des allgemeinen Erfindungsgedankens sei zunächst darauf verwiesen, dass festgestellt wurde, dass in einer schrägfallenden Leitung ein Milch-Luft-Gemisch in zwei Schichten derart fliessen kann, dass sich die schwerere Milch unten im Rohr bewegt, während die Luft darüberhinwegstreichen kann. Die Milch fliesst hier durch Schwerkraft.

In einer Steigleitung kann dagegen der Transport der Milch nur durch eine Druckdifferenz zwischen dem oberen und dem unteren Ende der Milchsäule oder des Milchpfropfens erfolgen. Eine Pfropfenbildung ist deshalb in der Steigleitung bei einer Transportart mit Hilfe von Unterdruck unumgänglich. Dies führt jedoch dazu, dass der Innendurchmesser einer Steigleitung nicht beliebig gross gewählt werden kann, obwohl es aufgrund der minimierung der Strömungsverluste und damit der Vakuumverluste im Melkzeug dringend erforderlich ist, einen möglichst grossen Innendurchmesser des Steigleitungsrohres anzustreben. Es wurde nun festgestellt, dass bei zu grossen Querschnitten des Steigrohres bzw. bei zu kleinen Milchflussraten der Hochtransport der Milch nicht mehr ruhig und gleichförmig erfolgt, denn unter diesen Bedingungen wird eine Pfropfenbildung zunehmend erschwert. Unter diesen Bedingungen bricht die in das Melkzeug zugegebene Transportluft zunehmend durch den zu transportierenden Milchpfropfen hindurch und die Pfropfenreste fliessen an der Innenwand der Steigleitung zurück, solange, bis sich ein neuer geschlossener Pfropfen bildet oder bis alle Milch als Tropfen oder als Tröpfchen durch die aufwärtsströmende Transportluft wirbelnd mitgerissen worden sind.

Da die Menge der zugegebenen Transportluft praktisch während jeder Melkphase annähernd gleich ist, ergibt sich als zusätzliche Erschwerung des gestellten Problems die Tatsache, dass die zugegebene Luftmenge allgemein derart gewählt wird, dass bei einem maximalen Milchfluss ein günstiger Abtransport der Milch gewährleistet ist. In diesem Falle liegt also ein ausgewogenes Verhältnis zwischen Milchfluss und zugesetzter Transportluftmenge vor. Zu Beginn und am Ende eines Melkzyklus liegt jedoch der Milchfluss wesentlich niedriger als der maximale Milchfluss. Bei einer typischen Milchflusskurve dauert der Spitzenmilchfluss also nur relativ kurz, während z.B. in 50% der Melkzeit der Milchfluss jeweils nur etwa 10–20% des maximalen Milchflusses erreicht werden. In der Spätlaktation oder wenn z.B. aufgrund ungleichlanger Melkintervalle (beim Abendmelken) deutlich kleinere Milchmengen ermolken werden, wird dieses Ungleichgewicht weiter verschärft. In diesen Fällen besteht sodann eine stark erhöhte Gefahr der Auflösung von Milchpfropfen und des Transports eines reinen Luft-Milch-Gemisches.

Die gestellte Aufgabe wird gemäss dem Grundgedanken der vorliegenden Erfindung dadurch gelöst, dass die Milch nach Möglichkeit über die gesamte Steigleitung transportiert wird ohne Rücklauf- oder Pendelbewegungen auszuführen.

Durch die GB-A 2 062 178 ist bereits eine Melkanlage mit einem Sammelstück bekanntgeworden, bei dem die von den Melkbechern kommenden Milchabführleitungen in den oberen Teil dieses Sammelstücks münden und bei dem die Milch über eine am unteren Ende des Sammelstücks vorgesehene Milchabführleitung abgeführt wird, die normalerweise durch eine Ventilklappe verschlossen ist, die an einem Schwimmer angebracht ist. In den oberen Teil des Sammelstücks mündet weiterhin eine Unterdruckleitung, die durch ein Rückschlagventil verschliessbar ist, sofern im Sammelstück ein höherer Druck als in dieser Unterdruckleitung herrscht. Die Milch kann bei diesem Sammelstück praktisch immer in einem zusammenhängenden Kolben abgeführt werden, da die Milchabführleitung erst dann öffnet, wenn der Milchpegel in dem Sammelstück eine vorbestimmte Höhe, die durch den Schwimmer erfasst wird, erreicht hat. Der entscheidende Nachteil dieses Sammelstücks besteht jedoch darin, dass für den Betrieb der Melkanlage zwei unterschiedliche Unterdrücke notwendig sind. Ein erster hoher Unterdruck liegt an der Milchabführleitung an und dient als sogenanntes Transportvakuum. Der zweite niedrigere Unterdruck, der über das Rückschlagventil an dem oberen Teil des Sammelstücks anliegt, entspricht dem Melkvakuum. Der Nachteil dieser bekannten Anordnung besteht darin, dass gerade bei niedrigen Milchflüssen das hohe Transportvakuum an die Zitzen gelangen und dadurch erheblichen Schaden anrichten kann.

In der nicht vorveröffentlichten (Artikel 54(3)EPü) EP-A 0 057 816 der Anmelderin ist bereits ein Milchflussmesser beschrieben, bei dem die Milch zu einem gewissen Grad gestaut wird und mit Hilfe der gemessenen Stauhöhe der Milchfluss bestimmt wird. Ein solcher Milchflussmesser kann in eine Steigleitung eingeschaltet werden. Mit einem solchen Milchflussmesser kann jedoch nicht das Problem gelöst werden, einen verbesserten Transport der Milch von den Melkbechern zur hochverlegten Melkleitung zu erreichen.

Die der Erfindung zugrundeliegende Aufgabe wird gemäss einer ersten Verwirklichung der Erfindung dadurch gelöst, dass die Steigleitung als sich im Querschnitt von ihrem unteren Ende zu ihrem oberen Ende verjüngender Schlauch ausgebildet ist. Dadurch wird ein Aufbrechen des Milchpfropfens auch am oberen Ende der Steigleitung sicher verhindert.

Eine weitere alternative Lösung der gestellten Aufgabe besteht darin, dass in der Steigleitung mindestens eine Rücklaufsperre ausgebildet ist. Hierdurch wird die Formierung und Beibehaltung von geschlossenen zusammenhängenden Milchpfropfen erreicht. Die Milchrücklaufsperre kann etwa in Form von Venenklappen oder einem Rückschlagventil ausgebildet sein. Ein Rückfliessen der Milch oder Pendelbewegungen der Milch in der Steigleitung werden sicher vermieden.

Ein weiterer Lösungsgedanke der gestellten Aufgabe besteht darin, dass die Steigleitung in einem Teil in Form eines Siphons oder einer Schlaufe ausgebildet ist. Durch diese Massnahme wird insbesondere bei geringen Milchflüssen ein Zurückfliessen der Milch am oberen Ende der Steigleitung verhindert.

Ein weiterer Lösungsgedanke der gestellten Aufgabe besteht darin, dass die Steigleitung wenigstens über einen Teil ihrer Länge aus wenigstens zwei Rohrleitungen gebildet ist, die in Abhängigkeit von dem Milchfluss für den Milchtransport geöffnet oder geschlossen werden. Auf diese Weise kann der Querschnitt der Steigleitung optimal an den jeweils herrschenden Milchfluss angepasst werden, wodurch sich besonders günstige Transportbedingungen für die jeweiligen Milchpfropfen erzielen lassen.

Gemäss einer einfachen Ausgestaltung der Erfindung werden an allen unteren Enden der Rohrleitungen mit Ausnahme einer Rohrleitung jeweils Ventile vorgesehen, die in Abhängigkeit von dem Milchfluss steuerbar sind. Eine einfache Ausgestaltung eines solchen Ventils bei einer Ausbildung der Steigleitung in Form von zwei Rohrleitungen besteht darin, dass in einer der beiden Rohrleitungen ein in dieser Rohrleitung verschiebbarer Zylinder mit Längsbohrung vorgesehen ist, dessen Umfangswandung in Abhängigkeit von seiner Stellung der Zugang zur zweiten Rohrleitung verschliesst oder zunehmend freigibt. Eine andere zweckmässige Ausgestaltung der Erfindung zeichnet sich dadurch aus, dass in der Rohrleitung mit geringem Innenquerschnitt oder in der Steigleitung in Strömungsrichtung vor oder nach dieser Rohrleitung ein in Abhängigkeit von dem Milchfluss verstellbarer Sensor vorgesehen ist, der bei Überschreitung eines vorbestimmten Milchflusses ein normalerweise im geschlossenen Zustand gehaltenes und den Zugang zu der Rohrleitung mit grösserem Innenquerschnitt verschliessendes Membranventil öffnet.

Gemäss einer vorzugsweisen Ausführungsform wird die Ausbildung der Anlage derart getroffen, dass zwei Rohrleitungen mit vorzugsweise verschiedenen Innenquerschnitten vorgesehen sind, dass die Rohrleitung mit kleinerem Innenquerschnitt über ein Milchstaugefäss mit Überlauf sowie einem Ablauf in der Grössenordnung des Innenquerschnitts der Rohrleitung mit kleinerem Innenquerschnitt geführt ist, dass in dem Milchstaugefäss ein mit einem Ventil gekoppelter Schwimmer vorgesehen ist, der in Abhängigkeit von dem Milchstand in dem Milchstaugefäss zwischen einer ersten Stellung, in der das Ventil die Rohrleitung mit dem grösseren Innenquerschnitt geschlossen hält und einer zweiten Stellung, in der das Ventil die Rohrleitung öffnet, verstellbar ist, und dass das Milchstaugefäss derart in der Rohrleitung angeordnet ist, dass das Milchstauniveau etwa in Höhe des Anschlusses der Steigleitung an die hochverlegte Melkleitung liegt. Eine derartige Ausbildung hat den Vorteil, dass in der Steigleitung mit dem grösseren Innendurchmesser kein durch eine zusätzliche Staustufe hervorgerufener zusätzlicher Druckabfall verursacht wird. Da weiterhin das Milchstaugefäss so angeordnet ist, dass das Milchstauniveau etwa in Höhe des Anschlusses der Steigleitung an die hochverlegte Melkleitung liegt, wird keine erneute Beschleunigung der Milch beim Übergang von dem Milchstaugefäss in die Melkleitung durchgeführt, was zu einer schonenden Behandlung der Milch führt.

Vorzugsweise werden an dem Schwimmer auf seiner Ober- wie auch seiner Unterseite Haltemagnete vorgesehen, mit denen der Schwimmer in seiner ersten und zweiten Stellung in Form eines bistabilen Elementes lösbar festlegbar ist. Dadurch wird ein häufigeres Umschalten bei einer Änderung des Milchflusses zwischen einer geöffneten und einer geschlossenen Stellung der Rohrleitung mit grösserem Innenquerschnitt vermieden.

In ähnlicher Weise kann ein durch den Schwimmer in Abhängigkeit von seiner jeweiligen Stellung betätigbarer Schnappschalter vorgesehen sein, der gleichfalls eine bistabile Umschaltung zwischen einer Öffnung und einer Schliessung der zweiten Rohrleitung mit grösserem Innenquerschnitt ermöglicht.

Gemäss einer weiteren vorzugsweisen Ausführungsform der Erfindung wird die Anlage derart ausgebildet, dass zwei Rohrleitungen mit vorzugsweise verschiedenen Innenquerschnitten vorgesehen sind, dass ein Milchstaugefäss vorgesehen ist, in das die beiden Rohrleitungen in Form von an ihrem oberen Ende offenen Steigleitungen vorstehen, dass zwei Abläufe mit jeweils einem der Rohrleitung mit kleinerem bzw. grösserem Querschnitt entsprechenden Querschnitt vorgesehen sind, dass ein Schwimmer vorgesehen ist, der mit einem ersten, am oberen Ende der Rohrleitung mit grösserem Querschnitt vorgesehenen Ventil und einem zweiten, an dem Ablauf mit grösserem Querschnitt vorgesehenen Ventil derart gekoppelt ist, dass in Abhängigkeit von dem Milchstand in dem Milchstaugefäss das erste und das zweite Ventil geöffnet oder geschlossen werden, und dass das Milchstaugefäss derart in der Steigleitung angeordnet ist, dass das Milchstauniveau etwa in Höhe des Anschlusses der Steigleitung an die hochverlegte Melkleitung liegt.

Eine zweckmässige Ausgestaltung der Erfindung ergibt sich auch dadurch, dass zwei Rohrleitungen mit vorzugsweise verschiedenen Innenquerschnitten vorgesehen sind, dass in beide Rohrleitungen gemeinsam ein elektronischer Milchflussmesser geschaltet ist, dass strömungsoberhalb und/oder strömungsunterhalb des Milchflussmessers jeweils in der Rohrleitung mit dem grösseren Innenquerschnitt ein Ventil angeordnet ist, die wahlweise in Abhängigkeit von dem gemessenen Milchfluss öffenbar oder schliessbar sind und dass der einen gewissen Milchstau erzeugende Milchflussmesser derart in der Steigleitung angeordnet ist, dass das Milchstauniveau etwa in Höhe des Anschlusses der Steigleitung an die hochverlegte Milchleitung liegt.

Wie sich in überraschender Weise herausgestellt hat, können mit Hilfe der erfindungsgemässen Lösungen die folgenden Vorteile erzielt werden:

1. Der Anteil der freien Fettsäuren kann merklich gesenkt werden.

2. Es ergibt sich ein kleinerer Anteil an freiem Fett. Daraus resultiert eine bessere Separierbarkeit des Fettes sowie eine leichtere Entnahme einer repräsentativen Fettprobe aus dem Milchsammelbehälter.

3. Es wird eine geringere Schaumbildung in der Milch erreicht. Daraus resultiert eine bessere Hygiene in dem Milchsammelbehälter, eine geringere Gefahr des Überlaufens des Milchsammelbehälters sowie eine einfachere Ablesung der Milchmengen mit Hilfe von Milchmengenmessgeräten.

4. Das während den verschiedenen Phasen des Melkprozesses an den Zitzen herrschende Vakuum wird merklich stabilisiert, und

5. es wird erheblich die Gefahr reduziert, dass Mastitiserreger durch rücklaufende Milch aus der Milchabführleitung von einer Kuh zur anderen übertragen werden, wenn diese andere Kuh gerade blind gemolken wird.

Die vorliegende Erfindung ist insbesondere geeignet für eine Melkanlage mit hochverlegter Milchabführleitung oder mit hochverlegten Milchmesspokalen zu denen Steigleitungen hochführen. Die Erfindung kann jedoch allgemein in jeder Anlage mit Vorteil verwandt werden, in der Milch mit Hilfe von Unterdruck transportiert wird und in der die Milch über Steigleitungen geführt werden muss.

Im folgenden soll die Erfindung näher anhand von in der Zeichnung dargestellten vorzugsweisen Ausführungsbeispielen erläutert werden. In der Zeichnung zeigen:

Fig. 1 eine schematische Darstellung einer Melkanlage mit einer über Kopf verlegten Milchabführleitung, zu der von dem Melkzeug eine Steigleitung hochführt,

Fig. 2 ein Teil der Steigleitung, der in Form eines Siphons ausgebildet ist,

Fig. 3 ein Teil der Steigleitung, der in Form einer Schlaufe ausgebildet ist,

Fig. 4 eine andere Ausführungsform der Steigleitung,

Fig. 5 eine Ausführungsform einer in der Steigleitung vorgesehenen Rücklaufsperre,

Fig. 6 eine Ausführungsform der Steigleitung, die in zwei Rohrleitungen gegabelt ist, wobei in einer Rohrleitung eine Rücklaufsperre vorgesehen ist,

Fig. 7 einen Teil der Steigleitung, die in zwei Rohrleitungen aufgespalten ist, mit einem in Abhängigkeit von dem Milchfluss steuerbaren Ventil,

Fig. 8 eine Längsschnittansicht durch einen Teil der Steigleitung, mit einem in Abhängigkeit von dem Milchfluss steuerbaren Ventil,

Fig. 9 einen Längsschnitt unter einem Winkel von 90° entlang der Linie IX-IX durch die in Fig. 8 gezeigte Steigleitung,

Fig. 10 eine schematische Schnittansicht einer weiteren Ausführungsform einer Steigleitung mit einem in Abhängigkeit von dem Milchfluss steuerbaren Ventil,

Fig. 11 eine Schnittansicht durch die Anordnung in Fig. 10 entlang der Linie X-X, wobei ein Schlauchventil in seinem geöffneten Zustand dargestellt ist,

Fig. 12 eine ähnliche Schnittansicht wie in Fig. 11, wobei das Schlauchventil in seiner geschlossenen Stellung dargetellt ist,

Fig. 13 eine schematische Schnittansicht durch ein in der Steigleitung angeordnetes Milchstaugefäss,

Fig. 14 eine andere Ausführungsform eines in der Steigleitung angeordneten Milchstaugefässes,

Fig. 15 eine weitere Ausführungsform eines in der Steigleitung angeordneten Milchstaugefässes, und

Fig. 16 eine schematische Darstellung eines in der Steigleitung vorgesehenen Milchflussmessers.

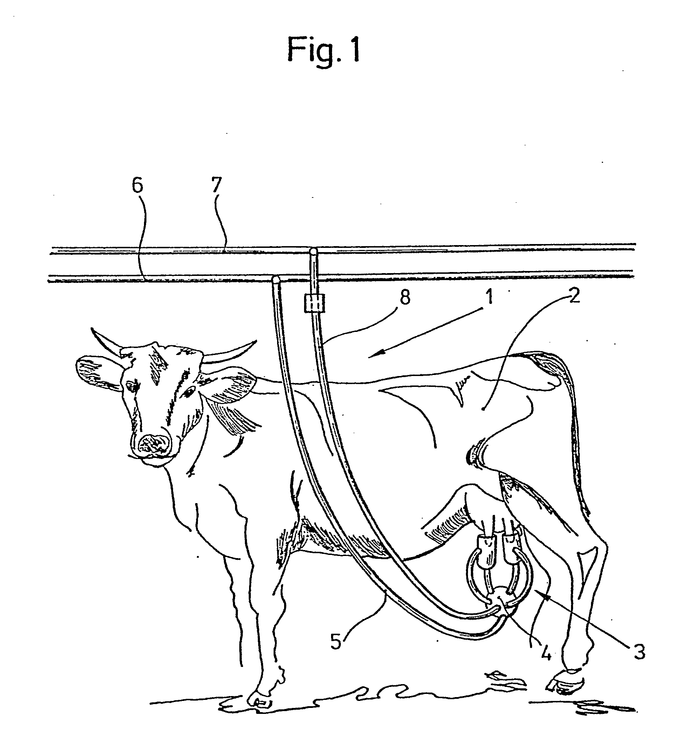

In Fig. 1 ist eine allgemein mit 1 bezeichnete Melkanlage dargestellt, die an dem Standplatz einer Kuh 2 montiert ist. Die mit Hilfe des an die Zitzen der Kuh angesetzten Melkzeuges 3 abgemolkene Milch wird in einem Sammelstück 4 gesammelt und über eine gemeinsame Steigleitung 5 in eine über Kopf angeordnete Milchabführleitung 6 mit Hilfe von Unterdruck abtransportiert. Parallel zu der Milchabführleitung 6 ist eine weitere Leitung 7 vorgesehen. An diese ist ein Pulsator angeschlossen, der über eine weitere Leitung 8 dem Melkzeug 3 abwechselnd Vakuum und Atmosphärendruck zuführt. Die Steigleitung 5 ist normalerweise in Form einer biegsamen Rohrleitung, etwa in Form eines Schlauches ausgeführt, der normalerweise in einer etwa durchhängenden Kettenlinie verläuft.

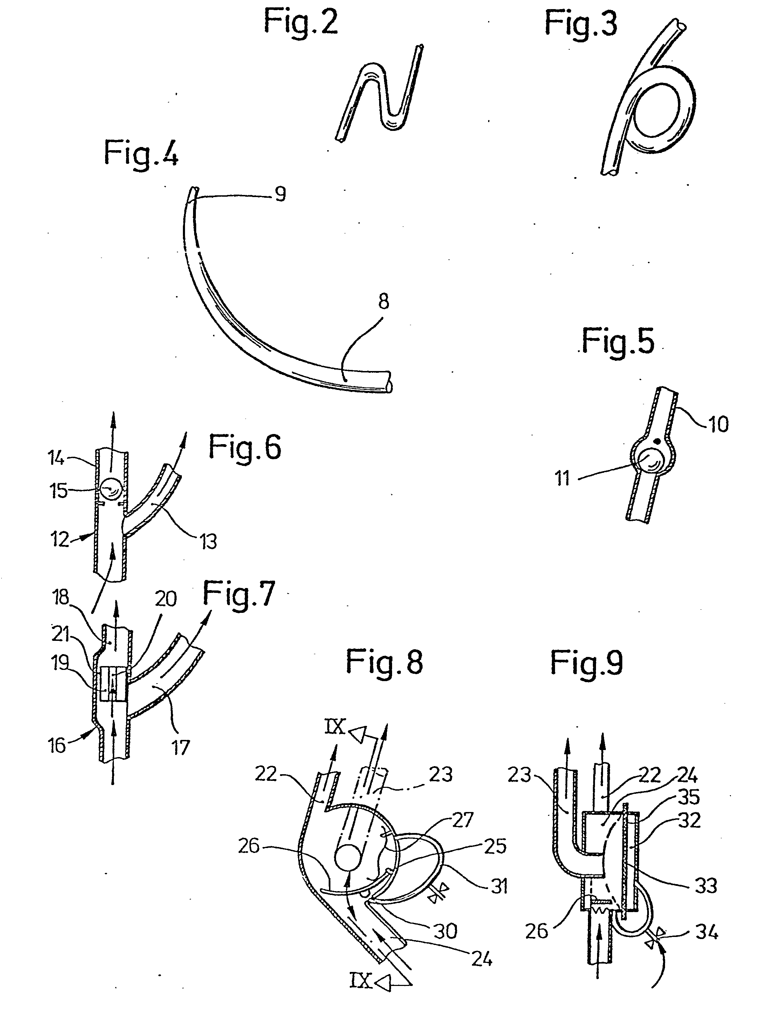

In Fig. 2 ist eine erste Ausführungsform einer Staustufe in der Steigleitung dargestellt. Diese Staustufe kann in Form eines Siphons ausgebildet sein. Eine andere Ausführungsform einer Staustufe zeigt die Fig. 3, in der die Steigleitung in Form einer Schlaufe ausgebildet ist. Zweckmässigerweise wird wenigstens eine solche Staustufe in der Steigleitung vorgesehen, und zwar vorzugsweise in etwa 1/2 bis 2/3 der Höhe der Steigleitung. In dieser Höhe nimmt die Gefahr der Auflösung des Pfropfens besonders stark zu, weil der anfängliche Transportschwung hier aufgezehrt ist. Derartige Staustufen gestatten die Steigleitung selbst mit verhältnismässig grossem Querschnitt auszubilden, so dass nur ein verhältnismässig geringer Vakuumabfall an den Zitzen auftritt. Der wesentliche Vorteil der Staustufen besteht darin, dass sich jeweils ein geschlossener Milchpfropfen bilden kann, sofern bei niedrigen Milchflüssen ansonsten die Gefahr einer Tröpfchenbildung besteht. Damit kann die Milch auch mit geringem Milchfluss in wenigen Schüben nach oben transportiert werden und wirbelt nicht die längste Zeit auf und ab.

Fig. 4 zeigt eine Steigleitung, deren innerer Querschnitt vom unteren Ende 8 gegen das obere Ende 9 hin sich kontinuierlich verringert. Der Querschnitt der Steigleitung könnte sich auch jeweils diskontinuierlich in Stufen verringern, jedoch hat sich eine solche Anordnung als nicht ganz so günstig erwiesen. Der Vorteil dieser Anordnung ist, dass sie besonders einfach ist und trotzdem bei verhältnismässig geringem Vakuumabfall an der Zitze eine möglichst weitgehende Beibehaltung eines zusammenhängenden Milchpfropfens auch im oberen kritischen Teil der Steigleitung ermöglicht.

In Fig. 5 ist eine Steigleitung 10 gezeigt, in der eine Rücklaufsperre in Form eines Kugelrückschlagventils 11 vorgesehen ist. Eine Rücklaufsperre könnte ebensogut auch in Form von sogenannten Venenklappen vorgesehen sein. Wird in der Steigleitung lediglich ein Rückschlagventil vorgesehen, so wird dies etwa in 60% der Höhe der Steigleitung angebracht. Werden zwei Rückschlagventile vorgesehen, so hat sich eine Anordnung auf einer Höhe von etwa 50 und 75% der Höhe der Steigleitung als vorteilhaft erwiesen.

In Fig. 6 ist ein unterer Teil der Steigleitung 12 gezeigt, die in eine erste Rohrleitung 13 und eine zweite Rohrleitung 15 aufgespalten ist. Der Querschnitt der ersten Rohrleitung 13 ist vorzugsweise kleiner als der der zweiten Rohrleitung 14. In der zweiten Rohrleitung ist ein Kugelrückschlagventil 15 vorgesehen. Die Kugel 15 hat vorzugsweise ein solches Gewicht und der Ventilsitz vorzugsweise einen solchen Durchmesser, dass bei geringem Milchfluss die gesamte Milch über die erste Rohrleitung 13 strömt und erst bei grösseren Milchflüssen und zunehmendem Druckabfall an der Kugel 15 ein Öffnen dieses Rückschlagventils auftritt, so dass sodann bei grossen Milchflüssen Milch durch beide Rohrleitungen 13 und 14 fliessen kann. Bei ausreichendem Milchfluss ist in diesem Falle sichergestellt, dass sich ein zusammenhängender Milchpfropfen sowohl in der Rohrleitung 13 wie in der Rohrleitung 14 bildet.

Bei einer anderen Ausführungsform gemäss Fig. 7 ist im unteren Teil einer Steigleitung 16, die in eine erste Rohrleitung 17 und eine zweite Rohrleitung 18 gegabelt ist, ein Ventil in Form eines in der zweiten Rohrleitung verschiebbaren Zylinders 19 vorgesehen. Der Zylinder weist eine Mittellängsbohrung 20 auf und ist derart in der Rohrleitung 18 geführt, dass über die Längsnut 21 auch bei geringem Milchfluss Milch durch die zweite Rohrleitung 18 strömen kann. Bei geringem Milchfluss befindet sich weiterhin der Zylinder in einer unteren Stellung, in der er vollständig die seitliche Einmündung der ersten Rohrleitung 17 verschliesst. Mit zunehmendem Milchfluss wird durch die impulsweise geförderte Milch der Zylinder in eine Stellung angehoben, in der er die erste Rohrleitung 17 freigibt. Auf diese Weise kann in Abhängigkeit von dem Milchfluss der Querschnitt des Steigrohrs entsprechend verändert werden. Der Vorteil dieser Anordnung besteht nicht nur im einfachen Aufbau, sondern auch im besonders geringen Druckverlust, weil die Steuerung aufgrund der seitlichen Mündung der Rohrleitung 17 mit sehr geringem Druckunterschied auskommt.

Eine andere Möglichkeit zur Steuerung des Querschnittes der Steigleitung mit Hilfe eines Ventils in Abhängigkeit von dem Milchfluss ist in den Figuren 8 und 9 dargestellt. Die Steigleitung 24 gabelt sich nach aufwärts in eine erste Rohrleitung 22 mit kleinem Querschnitt und eine zweite Rohrleitung 23 mit grösserem Querschnitt. Das untere Ende der Steigleitung 24 mündet in eine Kammer, wobei an der Mündung ein Sensor in Form einer um einen Schwenkpunkt 25 verschwenkbaren Klappe vorgesehen ist. Die Klappe ist mit Hilfe einer Feder 27 in eine das obere Ende der Steigleitung 24 verschliessende Stellung vorgespannt. Die Klappe 26 ist auch bei geringen Milchflüssen aufgrund des durch einen Milchkolben mitgeführten Impulses in eine geöffnete Stellung verschwenkbar, so dass der Milchkolben in die Kammer eintreten und durch diese durch die erste Rohrleitung 22 weitergeleitet werden kann. Die Klappe 26 weist einen Verschlussstopfen 30 auf, der im Ausgangszustand der Klappe 26 eine Leitung 31 verschliesst, die zu einer Steuerkammer 32 für ein Membranventil 33 führt. Die Leitung 31 ist über eine Drossel mit Atmosphäre verbunden. Befindet sich die Klappe 26 in ihrer in Fig. 8 dargestellten Ausgangsstellung oder wird bei geringem Milchfluss nur kurzzeitig verschwenkt, so hält der Verschlussstopfen 30 die Leitung 31 verschlossen, so dass die Steuerkammer 32 unter Atmosphärendruck steht. In diesem Fall liegt die Membran 35, da sich in der Kammer ein Unterdruck befindet, gegen das Ende der zweiten Rohrleitung 23 an, wie es in gestrichelten Linien dargestellt ist, so dass diese Rohrleitung verschlossen ist. In diesem Falle wird die Milch lediglich über die erste Rohrleitung 22 geführt, wobei die Kammer praktisch als eine Staukammer dient.

Wird die Klappe 26 dagegen bei grösseren Milchflüssen in einer praktisch stetig verschwenkten Stellung gehalten, so gibt der Verschlussstopfen 30 die Leitung 31 frei, so dass der in der Kammer herrschende Unterdruck in die Steuerkammer 32 des Membranventils gelangen kann. Da in diesem Falle auf beiden Seiten der Membran 33 gleicher Druck herrscht, geht diese in ihre unausgelenkte Lage zurück, wodurch das Ende der zweiten Rohrleitung 23 freigegeben wird. Von diesem Zeitpunkt ab wird neben der ersten Rohrleitung 22 auch die Rohrleitung 23 zum Transport der Milch herangezogen.

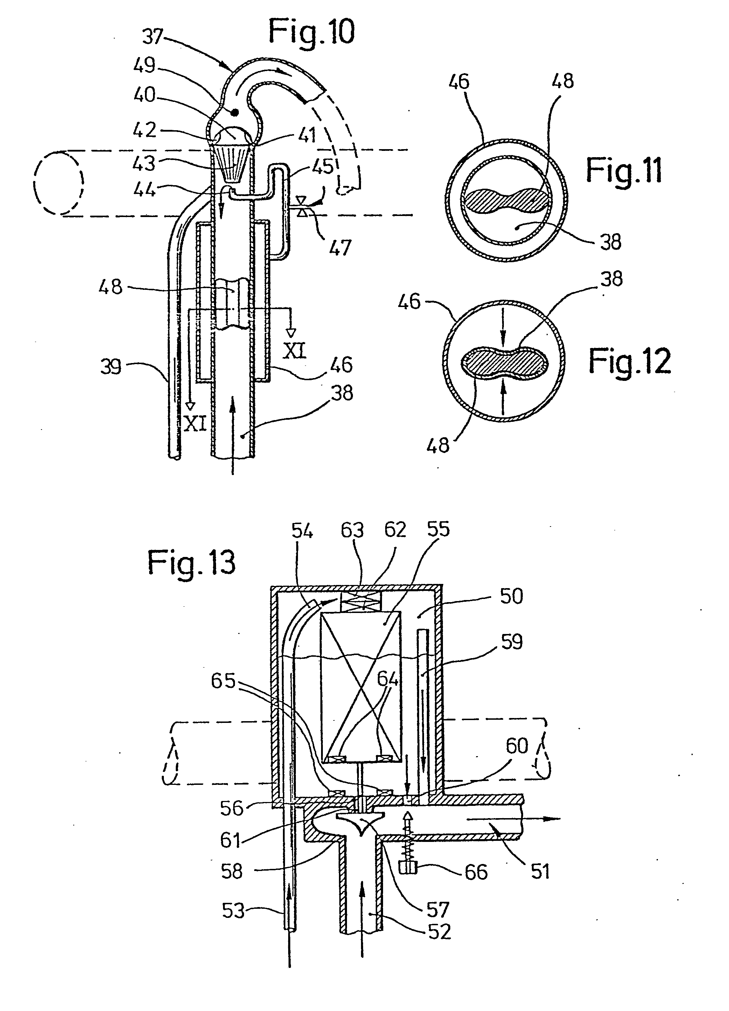

In Fig. 10 ist eine allgemein mit 37 bezeichnete Steigleitung gezeigt, die in ihrem unteren Teil in eine erste und eine zweite Rohrleitung 38 bzw. 39 aufgetrennt ist. Die zweite Rohrleitung 39 mündet unterhalb eines in der ersten Rohrleitung 38 vorgesehenen Schwebekörpers 40 in die erste Rohrleitung 38. Der Schwebekörper besteht aus einem etwa kegelstumpfförmigen Teil, das mit seinem oberen Rand 41 gegen einen in der Rohrleitung 38 ausgebildeten Sitz 42 anliegt. In der Aussenfläche des Schwebekörpers 40 sind in Längsrichtung verlaufende Nuten 43 ausgebildet, die auch ein Vorbeiströmen von Milch an dem Schwebekörper 40 gestatten, wenn sich dieser in seiner dargestellten unteren Stellung befindet, in der sein oberer Rand 41 gegen den Sitz 42 anliegt. In dieser unteren Stellung des Schwebekörpers 40 verschliesst dieser das Ende 44 einer in die Rohrleitung 38 vorstehenden Leitung 45. Die Leitung 45 ist mit einer Steuerkammer 46 verbunden, die die Rohrleitung 38 umgibt, die über die Länge der Steuerkammer 46 in Form eines elastischen Schlauches ausgebildet ist. Die Leitung 45 ist über eine Drossel 47 mit der Atmosphäre verbunden. In der Rohrleitung 38 ist in Höhe der Steuerkammer 46 ein im horizontalen Querschnitt etwa 8förmig ausgebildeter Stab 48 angeordnet.

Die Funktionsweise dieser Anordnung ist wie folgt: Bei niedrigen Milchflüssen fliesst die Milch lediglich durch die zweite Rohrleitung 39 und an dem Schwebekörper 40 vorbei, der sich in seiner ersten unteren Stellung befindet, in den oberen Teil der Steigleitung 37. Da in dieser Stellung des Schwebekörpers 40 das obere Ende 44 der Leitung 45 verschlossen ist, steht die Steuerkammer 46 über die Drossel 47 unter Atmosphärendruck, während im Inneren der Rohrleitung 38 ein Unterdruck herrscht. In diesem Zustand liegt die als Schlauch ausgebildete Rohrleitung 38 gegen den Stab oder Kern 48 dichtend an, wie es in Fig. 12 gezeigt ist. Unter diesen Bedingungen ist die Rohrleitung 38 geschlossen. Steigt der Milchfluss, so wird der Schwebekörper 40 hierdurch angehoben und gelangt in eine obere Stellung, in der er gegen den festen Anschlag 49 zur Anlage kommt. In dieser Stellung wird das obere Ende 44 der Leitung 45 freigegeben, so dass nunmehr der in der Rohrleitung 38 herrschende Unterdruck in die Steuerkammer 46 gelangen kann. Hierdurch gelangt der Schlauch der Rohrleitung 38 in seine undeformierte Form, wie sie in Fig. 11 dargestellt ist, da sowohl auf seiner Aussen- wie auf seiner Innenseite gleicher Druck herrscht. In dieser Stellung des Schlauches wird der Durchgang durch die Rohrleitung 38 freigegeben, so dass nunmehr Milch sowohl durch die erste wie durch die zweite Rohrleitung 38 und 39 strömen kann. Die beschriebene Ventilanordnung wird vorzugsweise am oberen Ende der Steigleitung vorgesehen, so dass die Milch, die den Schwebekörper 40 passiert hat, praktisch ohne weiteren Energieaufwand in die nicht näher dargestellte Milchabführleitung fliessen kann.

In Fig. 13 ist eine andere Ausführungsform der Erfindung dargestellt, bei der ein Milchstaugehäuse 50 in der allgemein mit 51 bezeichneten Steigleitung vorgesehen ist. Im unteren Teil der Steigleitung 51 ist diese in eine erste und eine zweite Rohrleitung 52 bzw. 53 aufgetrennt. Die an ihrem oberen Ende 54 offene Rohrleitung 53 erstreckt sich bis nahezu unter die obere Begrenzung des Milchstaugehäuses in das Milchstaugehäuse hinein. In dem Milchstaugehäuse ist ein Schwimmer 55 vorgesehen, der über eine Stange 56 mit einem Ventilkörper 57 starr verbunden ist. Dieser kann dichtend gegen einen Ventilsitz 58 anliegen, der das obere Ende der Rohrleitung 52 bildet. In dem Milchstaugehäuse 50 ist ein Überlauf 59 vorgesehen, der in den oberen lediglich aus einer Rohrleitung bestehenden Teil der Steigleitung 51 mündet. Im Boden des Milchstaugehäuses ist weiterhin ein Ablauf 60 vorgesehen, der gleichfalls in den oberen Teil der Steigleitung 51 mündet. Weiterhin ist eine Öffnung 61 um die Stange 56 herum in den Boden des Milchstaugehäuses ausgebildet. Diese Öffnung verbindet normalerweise das Innere des Milchstaugehäuses mit dem oberen Teil der Steigleitung 51. Am oberen Ende des Schwimmers 55 ist ein Magnet 62 befestigt, der mit einem entsprechenden Magneten 63 zusammenwirken kann, der im oberen Teil des Milchstaugehäuses angebracht ist. Weiterhin sind auf der Unterseite des Schwimmers Magnete 64 vorgesehen, die mit Magneten 65 auf dem Boden des Milchstaugehäuses zusammenwirken können. Weiterhin ist die Öffnung des Ablaufs 60 mit Hilfe eines Reduzierventils 66 einstellbar.

Die Funktionsweise dieser Anordnung ist wie folgt:

Zunächst wird das Reduzierventil 66 derart eingestellt, dass der Querschnitt der Öffnung 61 zusammen mit der Öffnung des Ablaufs 60 etwa gleich gross oder etwas kleiner als der Querschnitt der Rohrleitung 53 ist. Bei einem geringen Milchfluss wird lediglich Milch durch die Rohrleitung 53 in das Milchstaugehäuse gefördert, und es sammelt sich in diesem lediglich eine verhältnismässig geringe Menge von Milch an, so dass sich der Schwimmer 55 in seiner unteren Stellung befindet. In dieser unteren Stellung wird der Schwimmer durch die Magnete 64 an den Magneten 65 gehalten. In dieser unteren Stellung des Schwimmers verschliesst das Ventil 57 die Rohrleitung 52. Steigt der Milchfluss, so wird zunächst die Menge an Milch in dem Milchstaugehäuse 50 zunehmen bis zu einem solchen Punkt, an dem der Auftrieb des Schwimmers 55 die Haltekraft der Magnete 64, 65 überwindet. Hierdurch gelangt der Schwimmer in eine Lage, in der der Magnet 62 mit dem Magneten 63 derart zusammenwirkt, dass der Schwimmer in einer oberen Stellung gehalten wird. In dieser Stellung verschliesst die Oberseite des Ventils 57 die Öffnung 61, während das Ventil 57 selbst die Rohrleitung 52 freigibt. In diesem Zustand kann also Milch sowohl durch die Rohrleitung 52 wie durch die Rohrleitung 53 und über den Ablauf 60 in das obere Ende der Steigleitung 51 gelangen. Da in diesem Zustand die Menge an Milch, die über die Rohrleitung 53 gefördert wird, niedriger ist als in dem Zustand, in dem ein maximaler Milchfluss allein durch die Rohrleitung 53 fliesst, ist die Konstruktion derart gewählt, dass die Öffnung 61 in dieser Stellung verschlossen ist. Dadurch fliesst eine verringerte Menge an Milch aus dem Milchstaugehäuse ab, so dass insgesamt das Milchniveau in dem Milchstaugehäuse konstant gehalten wird. Verringert sich jedoch der Milchfluss, und wird dabei der durch die Rohrleitung 53 fliessende Milchfluss weiter verringert, so führt dies schliesslich zu einer Erniedrigung des Milchniveaus in dem Milchstaugehäuse. Wird hierbei ein bestimmtes Niveau unterschritten, bei dem das Gewicht des Schwimmers 55 infolge des verringerten Auftriebs so gross wird, dass die Kraft der Magnete 62 und 63 nicht mehr ausreicht, um den Schwimmer zu halten, so fällt dieser in seine erste untere Stellung zurück, wodurch die Rohrleitung 52 wieder geschlossen wird. Der weitere Milchfluss erfolgt sodann allein wieder über die Rohrleitung 53. Die gezeigte Vorrichtung weist den Vorteil auf, dass nur die kleine Steigleitung über das Milchstaugefäss geführt wird. Damit kann dieses klein und handlich gebaut werden. Ausserdem hält diese Anordnung die durch jedes Staugefäss zusätzlich verursachten Druckverluste gerade dann besonders klein, wenn hohe Milchflüsse auftreten. Auf diese Weise wird erreicht, dass gerade bei diesem kritischen Bereich kein zusätzlicher Vakuumabfall an der Zitze auftritt.

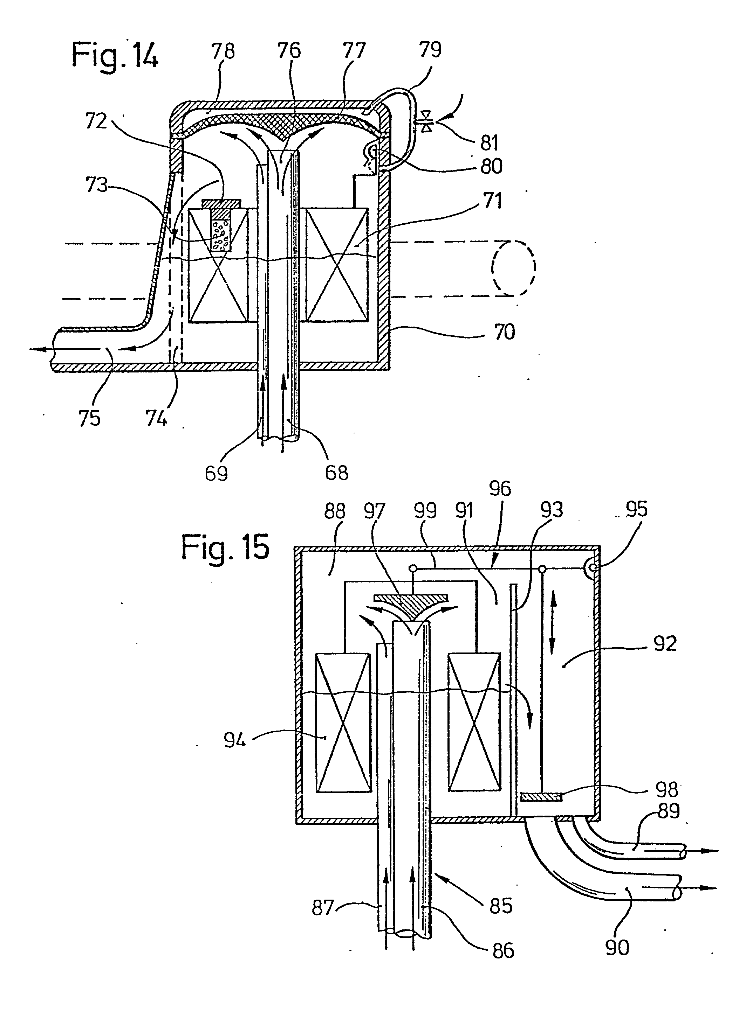

In Fig. 14 ist eine weitere Ausführungsform dargestellt, in der der untere Teil der Steigleitung in Form von zwei zueinander parallel geführten Rohrleitungen 68, 69 ausgebildet ist, die jeweils mit ihren offenen Enden in ein Milchstaugehäuse 70 vorstehen. In dem Milchstaugehäuse 70 ist ein die Rohrleitung 68, 69 ringförmig umgebender Schwimmer 71 vorgesehen. In dem Schwimmer ist eine durch einen Schraubverschluss 72 verschliessbare Aussparung 73 ausgebildet, in die Material mit von dem Schwimmer verschiedenem spezifischen Gewicht einfüllbar ist, um den Schwebezustand des Schwimmers genau einzustellen. In der Seitenwand des Milchstaugehäuses ist ein in Längsrichtung und vorzugsweise vertikal verlaufender Schlitz 74 ausgebildet, der in den oberen Teil der allgemein mit 75 bezeichneten Steigleitung führt. Das obere Ende 76 der Rohrleitung 68, das über das obere Ende der Rohrleitung 69 hinaus vorsteht, ist mit Hilfe einer Membran 77 verschliessbar. Die Membran 77 ist im oberen Teil des Milchstaugehäuses eingespannt und trennt von diesem eine Steuerkammer 78 ab, die über eine Leitung 79 mit dem unteren Teil des Milchstaugehäuses verbunden ist. Das in diesen unteren Teil mündende Ende der Leitung 79 ist mit Hilfe eines Schnappschalters 80 verschliessbar. Der Schnappschalter ist zwischen zwei festen Stellungen und durch den Schwimmer verstellbar. In der Leitung 79 ist eine Drossel 81 vorgesehen, über die die Leitung 79 mit der Atmosphäre verbunden ist.

Die Funktionsweise dieser Anordnung ist wie folgt:

Bei nur geringen Milchflüssen fliesst allein Milch über die Rohrleitung 69, und in diesem Fall ist das Milchniveau in dem Milchstaugehäuse äusserst niedrig, da praktisch die gesamte Milch unmittelbar über den Schlitz 74 in die Steigleitung 75 abfliesst. In diesem Zustand befindet sich der Schwimmer 71 in einer Stellung, in der er den Schnappschalter 78 nicht betätigen kann. In dieser Stellung verschliesst der Schnappschalter 80 die Leitung 79, so dass in der Steuerkammer 78 Atmosphärendruck herrscht. Dadurch liegt die Membran 77 dichtend gegen das obere Ende 76 der Rohrleitung 68 an und verschliesst diese. Steigt der Milchfluss über die Rohrleitung 69, so steigt auch das Milchniveau in dem Milchstaugehäuse 70, bis der Schwimmer bei seiner Aufwärtsbewegung den Schnappschalter 80 in seine zweite Stellung umschaltet. In dieser zweiten Stellung gibt der Schnappschalter 80 die Leitung 79 frei, so dass nunmehr in die Steuerkammer 78 der Unterdruck aus dem unteren Teil des Milchstaugehäuses gelangen kann. Hierdurch wird das obere Ende 76 der Rohrleitung 68 freigegeben. Ab diesem Zeitpunkt kann die Milch sowohl durch die Rohrleitung 68 wie durch die Rohrleitung 69 strömen. Bei einer abermaligen Abnahme des Milchflusses verlaufen die geschilderten Vorgänge in umgekehrter Reihenfolge. Die beschriebene Anordnung eignet sich zum Einbau am oberen Ende der Steigleitung und möglichst in einer solchen Höhe, dass die über die Steigleitung 75 abfliessende Milch unmittelbar in die nicht näher dargestellte Milchabführleitung abfliessen kann.

In Fig. 15 ist eine Anordnung dargestellt, in der das untere Ende der allgemein mit 85 bezeichneten Steigleitung, wie bei der Ausführungsform der Figur 14, in Form von zwei getrennten Rohrleitungen 86 und 87 ausgebildet ist. Diese Rohrleitungen ragen mit ihren oben offenen Enden in ein Milchstaugehäuse 88 vor. Am Boden des Milchstaugehäuses sind zwei getrennte, die Fortsetzung der Steigleitung 85 bildende Rohrleitungen 89, 90 vorgesehen. Das Milchstaugehäuse ist in zwei Kammern 91 und 92 unterteilt, die lediglich durch einen senkrecht verlaufenden Schlitz 93 miteinander verbunden sind. In die erste Kammer 91 münden die Rohrleitungen 86, 87, während mit der Kammer 92 die Rohrleitungen 89, 90 in Verbindung stehen. In der Kammer 91 ist ein, die Rohrleitungen 86, 87 umgebender ringförmiger Schwimmer 94 vorgesehen. An der Innenwand des Milchstaugehäuses 88 ist in einem Schwenkpunkt 95 ein Gestänge 96 verschwenkbar angebracht. An dem Gestänge 96 ist ein Ventilkörper 97 sowie ein Ventilkörper 98 angebracht, die dichtend das obere Ende der Rohrleitung 86 bzw. die Öffnung der Rohrleitung 90 verschliessen bzw. gemeinsam diese Öffnungen freigeben können. Der Schwimmer 94 ist mit dem Gestänge 96 über eine Verbindung 99 verbunden.

Die Funktionsweise dieser Anordnung ist wie folgt:

Bei geringem Milchfluss fliesst lediglich Milch über die Rohrleitung 87, und der Schwimmer 94 befindet sich, da sich in dem Milchstaugehäuse nur wenig Milch befindet, in einer unteren Stellung. In dieser Stellung ist das Gestänge 96 derart verschwenkt, dass die Ventilkörper 97 und 98 jeweils die zugeordneten Leitungen verschliessen. In diesem Falle fliesst die über die Rohrleitung 87 ankommende Milch über den Schlitz 93 in die Kammer 92 und wird aus dieser über die Rohrleitung 89 mit einem etwa gleichen Querschnitt wie die Rohrleitung 87 abgeführt. Bei zunehmendem Milchfluss steigt auch das Milchniveau der in der Kammer 91 gestauten Milch. Hierdurch wird der Schwimmer 94 angehoben und verschwenkt das Gestänge 96, bis die Ventilkörper 97 und 98 ihre zugeordneten Rohrleitungen 86 und 90 freigeben. Bei einem sinkenden Milchfluss wird derselbe Vorgang in umgekehrter Reihenfolge durchlaufen. Da bei dieser Anordnung sowohl die Zuführung in das wie die Abführung aus dem Milchstaugefäss geschaltet werden, werden hier besonders niedrige FFA-Werte erreicht. Ausserdem kann diese Vorrichtung sowohl am unteren wie am oberen Ende der Steigleitung oder dazwischen eingesetzt werden.

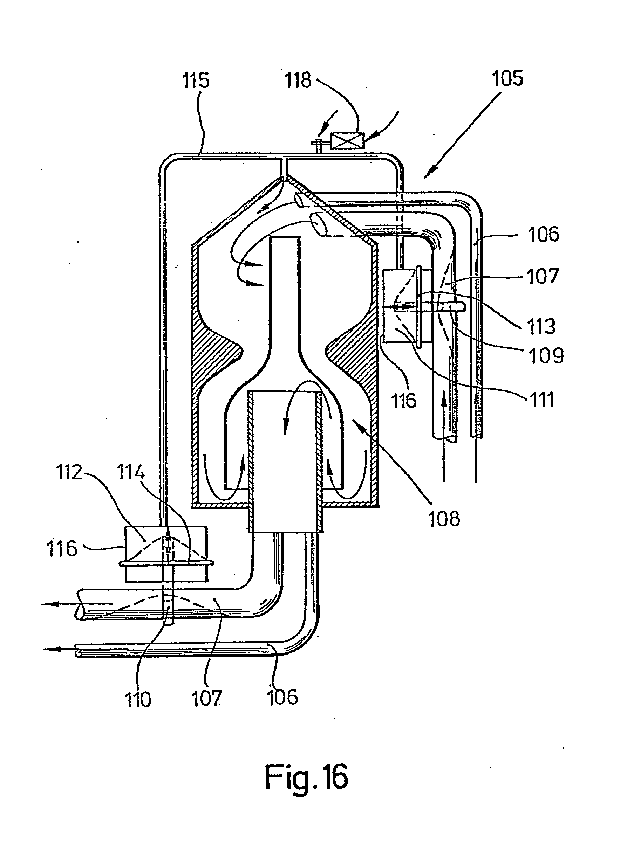

In Fig. 16 ist eine weitere Ausführungsform dargestellt, bei der die allgemein mit 105 bezeichnete Steigleitung in zwei getrennte, parallel geführte Rohrleitungen 106 und 107 aufgetrennt ist. In diese Rohrleitungen ist ein elektronischer Milchflussmesser geschaltet, wie er in der EP-A 0 057 816 beschrieben ist und deshalb nicht weiter im einzelnen beschrieben werden soll. Die beiden Rohrleitungen 106 und 107 haben vorzugsweise unterschiedliche Innenquerschnitte. Die Rohrleitung 107 ist in Form eines elastischen Schlauches ausgebildet, der strömungsoberhalb des Milchflussmessers 108 mit Hilfe einer Klemme 109 und strömungsunterhalb des Milchflussmessers mit einer Klemme 110 abklemmbar ist. Die Klemmen 109 und 110 sind jeweils mit Hilfe einer pneumatischen Betätigungsvorrichtung 111 bzw. 112 betätigbar. Diese Betätigungsvorrichtungen sind derart ausgebildet, dass die Klemme jeweils an einer Membran 113 bzw. 114 befestigt ist, die jeweils bei Anlegung eines Unterdrucks an ihre eine Seite aufgrund des auf die andere Seite wirkenden atmosphärischen Drucks derart auslenkbar sind, dass die Klemmen 109 und 110 die betreffenden Schläuche abquetschen. Das Anlegen eines Unterdrucks bzw. von atmosphärischem Druck an ein Leitungssystem 115, das mit den Betätigungsvorrichtungen 116 für die Klemmen 109 und 110 verbunden ist, ist schematisch durch eine Steuervorrichtung 118 angedeutet. Selbstverständlich können die Betätigungsvorrichtungen 116 anstatt aus pneumatischen Betätigungsvorrichtungen auch aus elektromagnetischen Betätigungsvorrichtungen bestehen, die durch entsprechende elektrische Signale von dem elektrischen Milchflussmesser gesteuert werden.

Die vorbeschriebene Anordnung mit einem elektrischen Milchflussmesser eignet sich insbesondere dafür, dass die Steigleitung nicht lediglich in zwei, sondern ggf. auch in mehrere parallele Rohrleitungen unterteilt ist, in die insgesamt der Milchflussmesser eingesetzt ist. In einem solchen Falle können für jede Rohrleitung getrennte Ventil- oder Absperrvorrichtungen vorgesehen werden, die etwa aufeinanderfolgend in Abhängigkeit von dem durch den Milchflussmesser gemessenen Milchfluss geöffnet bzw. geschlossen werden können. Auf diese Weise kann der für den Milchfluss zur Verfügung stehende Querschnitt der Steigleitung sehr genau in Abhängigkeit von dem Milchfluss gesteuert werden.

**Patentansprüche**

1. Melkanlage, bei der die ermolkene Milch mit Hilfe des in der Melkleitung (6) vorhandenen Unterdrucks über eine Steigleitung (5) in die über Euterniveau liegende Melkleitung (6) transportiert wird, dadurch gekennzeichnet, dass die Steigleitung (5) als sich im Querschnitt von ihrem unteren Ende (8) zu ihrem oberen Ende (9) verjüngender Schlauch ausgebildet ist.

2. Melkanlage, bei der die ermolkene Milch mit Hilfe des in der Melkleitung (6) vorhandenen Unterdrucks über eine Steigleitung (5) in die über Euterniveau liegende Melkleitung (6) transportiert wird, dadurch gekennzeichnet, dass in der Steigleitung (5) mindestens eine Rücklaufsperre (11) ausgebildet ist.

3. Anlage nach Anspruch 2, dadurch gekennzeichnet, dass in der Steigleitung (5) ein Rückschlagventil (11) vorgesehen ist.

4. Anlage nach Anspruch 2 oder 3, dadurch gekennzeichnet, dass die Steigleitung (12) wenigstens über einen Teil ihrer Länge aus zwei Rohren (13, 14) mit vorzugsweise verschiedenem Innenquerschnitt gebildet ist, und dass wenigstens in dem Rohr (14) mit dem grösseren Innenquerschnitt eine Rücklaufsperre (15) vorgesehen ist.

5. Melkanlage, bei der die ermolkene Milch mit Hilfe des in der Melkleitung (6) vorhandenen Unterdrucks über eine Steigleitung (5) in die über Euterniveau liegende Melkleitung (6) transportiert wird, dadurch gekennzeichnet, dass die Steigleitung (5) in einem Teil in Form eines Siphons oder einer Schlaufe ausgebildet ist.

6. Melkanlage, bei der die ermolkene Milch mit Hilfe des in der Melkleitung (6) vorhandenen Unterdrucks über eine Steigleitung (5) in die über Euterniveau liegende Melkleitung (6) transportiert wird, dadurch gekennzeichnet, dass die Steigleitung (5; 85) wenigstens über einen Teil ihrer Länge aus wenigstens zwei Rohrleitungen (86, 87; 89, 90; 106, 107) gebildet ist, die in Abhängigkeit von dem Milchfluss für den Milchtransport geöffnet oder geschlossen werden.

7. Anlage nach Anspruch 6, dadurch gekennzeichnet, dass zwei Rohrleitungen (17, 18; 22, 23) mit vorzugsweise verschiedenen Innenquerschnitten vorgesehen sind, und dass in der Rohrleitung mit kleinerem Innenquerschnitt ein den Durchfluss durch diese Rohrleitung gestattendes und den Durchfluss durch die Rohrleitung mit grösserem Innenquerschnitt versperrendes Ventil (19; 33) vorgesehen ist, das in Abhängigkeit von dem Milchfluss in eine den Durchfluss durch die Rohrleitung mit dem grösseren Innenquerschnitt freigebende Stellung verstellbar ist.

8. Anlage nach Anspruch 7, dadurch gekennzeichnet, dass das Ventil aus einem in der Rohrleitung (18) mit kleinerem Innenquerschnitt verschiebbaren Zylinder (19) mit Längsbohrung (20) besteht, dessen Umfangswandung in Abhängigkeit von seiner Stellung den Zugang zu der Rohrleitung (17) mit grösserem Innenquerschnitt verschliesst oder zunehmend freigibt.

9. Anlage nach Anspruch 7, dadurch gekennzeichnet, dass in der Rohrleitung (22) mit kleinerem Innenquerschnitt oder in der Steigleitung (24) ein in Abhängigkeit von dem Milchfluss verstellbarer Sensor (26) vorgesehen ist, der bei Überschreitung eines vorbestimmten Milchflusses ein normalerweise im geschlossenen Zustand gehaltenes und den Zugang zu der Rohrleitung (23) mit grösserem Innenquerschnitt verschliessendes Membranventil (33) öffnet.

10. Anlage nach Anspruch 9, dadurch gekennzeichnet, dass die Steuerkammer (32) des Membranventils (33) einerseits über eine Drossel (34) mit der Atmosphäre und andererseits in Abhängigkeit von der Stellung des Sensors (26) mit dem in der Steigleitung herrschenden Unterdruck verbunden ist.

11. Anlage nach Anspruch 9 oder 10, dadurch gekennzeichnet, dass die Membran in Form eines die Rohrleitung (38) mit grösserem Querschnitt bildenden Schlauches ausgebildet ist, und dass innerhalb des Schlauches in Höhe einer den Schlauch umschliessenden Steuerkammer (46) ein im Querschnitt 8förmiger Kern (48) angeordnet ist, gegen den die Innenwand des Schlauches im verschlossenen Zustand der Rohrleitung anliegt.

12. Anlage nach einem der Ansprüche 7 bis 11, dadurch gekennzeichnet, dass der Sensor in Form eines Schwebekörpers (40) ausgebildet ist, der in Abhängigkeit von dem Milchfluss zwischen einer ersten, eine Steuerleitung (45) zur Steuerung des Ventils (38, 48) verschliessende und eine die Steuerleitung (45) freigebenden zweiten Stellung verstellbar ist.

13. Anlage nach Anspruch 6, dadurch gekennzeichnet, dass zwei Rohrleitungen (52, 53) mit vorzugsweise verschiedenen Innenquerschnitten vorgesehen sind, dass die Rohrleitung (53) mit kleinerem Innenquerschnitt über ein Milchstaugefäss (50) mit Überlauf (59) sowie einem Ablauf (60, 61) in der Grössenordnung des Innenquerschnitts der Rohrleitung mit kleinerem Innenquerschnitt geführt ist, dass in dem Milchstaugefäss ein mit einem Ventil (59) gekoppelter Schwimmer (55) vorgesehen ist, der in Abhängigkeit von dem Milchstand in dem Milchstaugefäss zwischen einer ersten Stellung, in der das Ventil die Rohrleitung (52) mit dem grösseren Innenquerschnitt geschlossen hält und einer zweiten Stellung, in der das Ventil die Rohrleitung öffnet, verstellbar ist, und dass das Milchstaugefäss (50, 70, 88) derart in der Rohrleitung angeordnet ist, dass das Milchstauniveau etwa in Höhe des Anschlusses der Steigleitung (5) an die hochverlegte Melkleitung (6) liegt.

14. Anlage nach Anspruch 13, dadurch gekennzeichnet, dass der Ablauf durch eine erste Öffnung (60) und eine zweite, im geschlossenen Zustand des Ventils (57) geöffnete und im geöffneten Zustand des Ventils geschlossene Öffnung (61) gebildet wird.

15. Anlage nach Anspruch 13 oder 14, dadurch gekennzeichnet, dass der Schwimmer mit Hilfe von Magneten (63, 62; 64, 65) in seiner ersten und zweiten Stellung in Form eines bistabilen Elementes lösbar festlegbar ist.

16. Anlage nach einem der Ansprüche 13 bis 15, dadurch gekennzeichnet, dass der Querschnitt des Ablaufs (60, 61) verstellbar ist.

17. Anlage nach einem der Ansprüche 14 bis 16, dadurch gekennzeichnet, dass der Querschnitt der ersten Öffnung (60) des Ablaufs mit Hilfe eines Reduzierventils (66) einstellbar ist.

18. Anlage nach einem der Ansprüche 13 bis 17, dadurch gekennzeichnet, dass der Überlauf (59) und der Ablauf (60, 61) des Milchstaugefässes (50) sowie die Rohrleitung (52) mit grösserem Innenquerschnitt in eine gemeinsame Steigrohrleitung (51) münden.

19. Anlage nach einem der Ansprüche 13 bis 18, dadurch gekennzeichnet, dass der Ventilkörper (57) des Ventils starr mit dem Schwimmer (55) verbunden ist.

20. Anlage nach einem der Ansprüche 13 bis 18, dadurch gekennzeichnet, dass ein in Abhängigkeit von der Stellung des Schwimmers (71) betätigbarer Schnappschalter (80) oder Kontaktschalter vorgesehen ist, der bei Überschreiten oder Unterschreiten einer vorbestimmten Lage des Schwimmers von einer ersten in eine zweite Stellung und umgekehrt zur Steuerung des Ventils (76, 77) in eine geöffnete oder geschlossene Stellung umschaltbar ist.

21. Anlage nach einem der Ansprüche 13, 14 oder 16-20, dadurch gekennzeichnet, dass das Ventil in Form einer pneumatisch gesteuerten Membran (77) ausgebildet ist.

22. Anlage nach einem der Ansprüche 13 bis 21, dadurch gekennzeichnet, dass die Rohrleitung (68) mit grösserem Querschnitt in Form einer am oberen Ende (76) geöffneten Steigleitung in das Milchstaugefäss (70) vorsteht, und dass der Überlauf und der Ablauf in Form eines in Längsrichtung des Milchstaugefässes (70) über seine Seitenwand verlaufenden Schlitzes (74) mit einem wenigstens der Summe der Innenquerschnitte der Rohrleitung (68, 69) mit grösserem und kleinerem Innenquerschnitt entsprechenden Querschnitt ausgebildet sind.

23. Anlage nach Anspruch 6, dadurch gekennzeichnet, dass zwei Rohrleitungen (86, 87; 89, 90) mit vorzugsweise verschiedenen Innenquerschnitten vorgesehen sind, dass ein Milchstaugefäss (88) vorgesehen ist, in das die beiden Rohrleitungen (86, 87) in Form von an ihrem oberen Ende offenen Steigleitungen vorstehen, dass zwei Abläufe mit jeweils einem der Rohrleitung (89, 90) mit kleinerem bzw. grösserem Querschnitt entsprechenden Querschnitt vorgesehen sind, dass ein Schwimmer (94) vorgesehen ist, der mit einem ersten, am oberen Ende der Rohrleitung (86) mit grösserem Querschnitt vorgesehenen Ventil und einem zweiten, an dem Ablauf mit grösserem Querschnitt vorgesehenen Ventil derart gekoppelt ist, dass in Abhängigkeit von dem Milchstand in dem Milchstaugefäss (88) das erste und das zweite Ventil geöffnet oder geschlossen werden, und dass das Milchstaugefäss (88) derart in der Steigleitung angeordnet ist, dass das Milchstauniveau etwa in Höhe des Anschlusses der Steigleitung (5) an die hochverlegte Melkleitung (6) liegt.

24. Anlage nach Anspruch 23, dadurch gekennzeichnet, dass das erste und das zweite Ventil Verschlusskörper (97, 98) aufweisen, die an einem gemeinsam verstellbaren Gestänge (96) gehaltert sind, das in Abhängigkeit von der Stellung des Schwimmers (94) verstellbar ist.

25. Anlage nach Anspruch 6, dadurch gekennzeichnet, dass zwei Rohrleitungen (106, 107) mit vorzugsweise verschiedenen Innenquerschnitten vorgesehen sind, dass in beide Rohrleitungen gemeinsam ein elektronischer Milchflussmesser (108) geschaltet ist, dass strömungsoberhalb und/oder strömungsunterhalb des Milchflussmessers jeweils in der Rohrleitung (107) mit dem grösseren Innenquerschnitt ein Ventil (109, 111; 110, 112) angeordnet ist, die wahlweise in Abhängigkeit von dem gemessenen Milchfluss öffenbar oder schliessbar sind, und dass der einen gewissen Milchstau erzeugende Milchflussmesser derart in der Steigleitung angeordnet ist, dass das Milchstauniveau etwa in Höhe des Anschlusses der Steigleitung an die hochverlegte Milchleitung (6) liegt.

## Claims

1. A device for milking mechanically, in which the milked milk is transported with the aid of the low pressure prevailing in the milk pipe (6) via a rising pipe (5) into the milk pipe (5) disposed above udder level, characterised in that the rising pipe (6) is constructed as hose which narrows in cross-section from its lower end (8) to its upper end (9).

2. A device for milking mechanically, in which the milked milk is transported with the aid of the low pressure prevailing in the milk pipe (6) via a rising pipe (5) into the milk pipe (6) disposed above udder level, characterised in that at least one non-return barrier (11) is constructed in the rising pipe (5).

3. A device according to claim 2, characterised in that a non-return valve (11) is provided in the rising pipe (5).

4. A device according to claim 2 or 3, characterised in that the rising pipe (12) is constructed over at least a portion of its length of two tubes (13, 14) with preferably different inner cross-sections, and in that at least in the tube (14) with the larger inner cross-section a non-return barrier (15) is provided.

5. A device for milking mechanically, in which the milked milk is transported with the aid of the low pressure prevailing in the milk pipe (6) via a rising pipe (5) into the milk pipe (6) disposed above udder level, characterised in that the rising pipe (5) is constructed in one part in the form of a siphon or a loop.

6. A device for milking mechanically, in which the milked milk is transported with the aid of the low pressure prevailing in the milk pipe (6) via a rising pipe (5) into the milk pipe (6) disposed above udder level, characterised in that the rising pipe (5; 85), at least over a part of its length is constructed of at least two tubular pipes (86, 87; 89, 90; 106, 107) which, depending upon the flow of milk, are opened or closed for milk transport.

7. A device according to claim 6, characterised in that two tubular pipes (17, 18; 22, 23) with preferably different inner cross-sections are provided, and in that a valve (19; 33) is provided in the pipe with smaller inner cross-section which permits flow through this tubular pipe and prevents flow through the tubular pipe with greater inner cross-section, which valve is adjustable in dependence on the milk flow towards a position releasing the flow through the tubular pipe with the greater inner cross-section.

8. A device according to claim 7, characterised in that the valve consists of a cylinder (19) with longitudinal bore (20) displaceable in the tubular pipe (18) with smaller inner cross-section, the peripheral wall of the cylinder, depending upon its position, closes or increasingly releases the access to the tubular pipe (17) with greater inner cross-section.

9. A device according to claim 7, characterised in that a sensor (26) adjustable in dependence on the milk flow is provided in the tubular pipe (22) with smaller inner cross-section or in the rising pipe (24), which sensor, when a predetermined milk flow is exceeded, opens a diaphragm valve (33) normally held in the closed position and barring the access to the tubular pipe (23) with greater inner cross-section.

10. A device according to claim 9, characterised in that the control chamber (32) of the diaphragm valve (33) is connected on the one band via a throttle (34) to the atmosphere, and, on the other hand, dependig upon the position of the sensor (26) with the low pressure prevailing in the rising pipe.

11. A device according to claim 9 or 10, characterised in that the diaphragm is constructed in the form of a hose constituting the tubular pipe (38) with greater cross-section, and in that inside the hose at the level of a control chamber (46) surrounding the hose a core (48) having a figure of eight cross-section is disposed, against which core the inner wall of the hose lies in the closed condition of the tubular pipe.

12. A device according to one of claims 7 to 11, characterised in that the sensor is constructed in the form of a float (40) which is adjustable in dependence on the milk flow, between a first position closing a control pipe (45) to control the valve (38, 48) and a second position releasing the control pipe (45).

13. A device according to claim 6, characterised in that two tubular pipes (52, 53) with preferably different inner cross-sections are provided, in that the tubular pipe (53) with smaller inner cross-section is guided through a milk accumulation vessel (50) with overflow (59) as well as through an outlet (60, 61) of the same size as the inner cross-section of the tubular pipe with smaller inner cross-section, in that a float (55) coupled with a valve (59), is provided in the milk accumulation vessel, which float is adjustable in dependence on the milk level in the accumulation vessel between a first position in which the valve keeps the tubular pipe (52) with the greater inner cross-section closed, and a second position in which the valve opens the tubular pipe, and in that the milk accumulation vessel (50, 70, 80) is arranged in the tubular pipe in such a manner that the accumulated milk level lies substantially at the height of the connection of the rising pipe (5) with the milk pipe (6) above.

14. A device according to claim 13, characterised in that the outlet is formed by a first opening (60) and a second opening (61) which is open in the closed state of the valve (57) and closed in the open state of the valve.

15. A device according to claim 13 or 14, characterised in that the float is releasably held with the aid of magnets (63, 62; 64, 65) in its first and second position in the manner of a bistable element.

16. A device according to one of claims 13 to 15, characterised in that the cross-section of the outlet (60, 61) is adjustable.

17. A device according to one of claims 14 to 16, characterised in that the cross-section of the first opening (60) of the outlet is adjustable with the aid of a reducing valve (66).

18. A device according to one of claims 13 to 17, characterised in that the overflow (59) and the outlet (60, 61) of the milk accumulation vessel (50) and also the tubular pipe (52) with greater inner cross-section open out into a common rising tubular pipe (51).

19. A device according to one of claims 13 to 18, characterised in that the valve body (57) of the valve is rigidly connected with the float (55).

20. A device according to one of claims 13 to 18, characterised in that a tumbler switch (80) or contact switch actuable depending upon the position of the float is provided, which switch, as the float exceeds or falls below a predetermined position, can be switched over from a first position into a second position and back again to control the valve (76, 77) into an open or closed position.

21. A device according to one of claims 13, 14 or 16–20, characterised in that the valve is constructed in the form of a pneumatically controlled diaphragm (77).

22. A device according to one of claims 13 to 21, characterised in that the tubular pipe (68) with greater cross-section projects into the milk accumulation vessel (70) in the form of a rising pipe open at the upper end (76), and in that the overflow and the outlet are constructed in the form of a slot (74) extending in the longitudinal direction of the milk accumulation vessel (70) across its side wall with a cross-section corresponding at least to the sum of the inner cross-sections of the tubular pipes (68, 69) with greater and smaller inner cross-sections.

23. A device according to claim 6, characterised in that two tubular pipes (86, 87; 89, 90) with preferably different inner cross-sections are provided, in that a milk accumulation vessel (88) is provided into which both tubular pipes (86, 87) project in the form of rising pipes open at their upper ends, in that two outlets are provided with in each case a cross-section corresponding to the tubular pipe (88, 90) with smaller or greater cross-section, in that a float (94) is provided which is coupled with a first valve provided at the upper end of the tubular pipe (86) with greater cross-section and a second valve provided at the outlet with greater cross-section, in such a manner that, depending upon the milk level in the milk accumulation vessel (88) the first and the second valves are opened or closed, and in that the milk accumulation vessel (88) is disposed in the rising pipe in such a manner that the milk accumulation level lies substantially at the height of the connection of the rising pipe (5) to the milk pipe (6) above.

24. A device according to claim 23, characterised in that the first and second valve have closure bodies (97, 98) which are held on a common adjustable linkage (96) which is adjustable in dependence on the position of the float (94).

25. A device according to claim 6, characterised in that two tubular pipes (106, 107) with preferably different inner cross-sections are provided, in that an electronic milk flowmeter (108) is mounted in common in both tubular pipes, in that upstream and/or downstream of the milk flowmeter a respective valve (109, 111; 110, 112) is disposed in the tubular pipe (107) with the greater inner cross-section, which valves are selectively openable or closable in dependence on the measured milk flow, and in that the milk flowmeter producing a certain milk accumulation is disposed in the rising pipe in such a manner that the milk accumulation level lies substantially at the height of the connection of the rising pipe with the milk pipe above.

## Revendications

1. Installation de traite, dans laquelle le lait trait est acheminé à l'aide de la dépression présente dans le lactoduc (6), par une canalisation ascendante (5) vers le lactoduc (6) situé au dessus du niveau des mamelles, caractérisée en ce que la canalisation ascendante (5) est constituée par un tuyau dont la section transversale se rétrécit de l'extrémité inférieure (8) vers l'extrémité supérieure (9).

2. Installation de traite, dans laquelle le lait trait est acheminé à l'aide de la dépression présente dans le lactoduc (6), par une canalisation ascendante (5) vers le lactoduc (6) situé au dessus du niveau des mamelles, caractérisée en ce que la canalisation ascendante (5) comprend au moins une fermeture anti-retour (11).

3. Installation selon la revendication 2, caractérisée en ce que la canalisation ascendante (5) est équipée d'une soupape anti-retour (11).

4. Installation selon la revendication 2 ou 3, caractérisée en ce que la canalisation ascendante (12) est formée, sur au moins une partie de sa longueur, de deux conduites (13, 14) ayant de préférence des sections transversales intérieures différentes, et en ce que, au moins la conduite (14) ayant la section transversale intérieure la plus grande, comprend une fermeture anti-retour (15).

5. Installation de traite, dans laquelle le lait trait est acheminé à l'aide de la dépression présente dans le lactoduc (6), par une canalisation ascendante (5) vers le lactoduc (6) situé au dessus du niveau des mamelles, caractérisée en ce que, une partie de la canalisation ascendante (5) se présente sous la forme d'un siphon ou d'une boucle.

6. Installation de traite, dans laquelle le lait trait est acheminé à l'aide de la dépression présente dans le lactoduc (6), par une canalisation ascendante (5) vers le lactoduc (6) situé au dessus du niveau des mamelles, caractérisée en ce que la canalisation ascendante (5, 85) est formée, sur au moins une partie de sa longueur, d'au moins deux conduites tubulaires (86, 87, 89, 90, 106, 107) qui, en fonction du débit du lait sont ouvertes ou fermées au transport.

7. Installation selon la revendication 6, caractérisée en ce que deux conduites tubulaires (17, 18, 22, 23) ayant de préférence des sections transversales intérieures différentes, sont prévues, et en ce que la conduite tubulaire ayant la section transversale intérieure la plus petite, comporte une soupape (19, 33) permettant l'accès à cette conduite tubulaire et bloquant l'accès à la conduite tubulaire ayant la section transversale intérieure la plus grande, soupape qui, en fonction du débit de lait, peut pivoter dans une position qui laisse libre accès à la conduite tubulaire ayant la section transversale intérieure la plus grande.

8. Installation selon la revendication 7, caractérisée en ce que la soupape est constituée par un cylindre (19) coulissant dans la conduite tubulaire (18) dont la section transversale intérieure est la plus réduite et présentant une perforation longitudinale (20), la paroi périphérique de ce cylindre fermant ou libérant l'accès à la conduite tubulaire (17) ayant la section transversale intérieure la plus grande, en fonction de la position du cylindre.

9. Installation selon la revendication 7, caractérisée en ce que la conduite tubulaire (22) ayant la section transversale intérieure la plus réduite ou la canalisation ascendante (24) comportent un palpeur (26) réglable en fonction du débit de lait qui, lorsqu'un certain débit préalablement déterminé est dépassé, ouvre une soupape à membrane (33), normalement fermée, bloquant l'accès à la conduite tubulaire (23) ayant la section transversale tubulaire la plus grande.

10. Installation selon la revendication 9, caractérisée en ce que la chambre de commande (32) de la soupape à membrane (33) est en communication, d'une part, avec l'atmosphère par l'intermédiaire d'un papillon (34), et d'autre part, avec la dépression présente dans la canalisation ascendante, en fonction de la position du palpeur (26).

11. Installation selon la revendication 9 ou 10, caractérisée en ce que la membrane est réalisée sous la forme d'un tuyau formant la conduite tubulaire (38) ayant la section transversale intérieure la plus large, et en ce que ce tuyau renferme, à la hauteur d'une chambre de commande (46) qui l'entoure, un noyau (48) ayant une section transversale en 8, et contre lequel s'appuie la paroi intérieure du tuyau lorsque ce dernier est fermé.

12. Installation selon l'une des revendications 7 à 11, caractérisée en ce que le palpeur est réalisé sous la forme d'un corps flottant (40) qui, en fonction du débit de lait, se déplace entre une première position qui ferme une conduite de commande (45) de la soupape (38, 48) et une deuxième position qui libère cette même conduite (45).

13. Installation selon la revendication 6, caractérisée en ce que deux conduites tubulaires (52, 53) ayant de préférence des sections transversales intérieures différentes sont prévues, en ce que la conduite tubulaire (53) dont la section transversale intérieure est la plus réduite, passe par un vase de retenue du lait (50) comportant un trop-plein (59) ainsi qu'un canal d'évacuation (60, 61) dont la section transversale avoisine celle de la conduite tubulaire ayant la section transversale intérieure la plus réduite, en ce que le vase de retenue du lait est muni d'un flotteur (55) qui est couplé à une soupape (59) et qui, en fonction du niveau de lait dans le vase de retenue, se déplace entre une première position, dans laquelle la soupape ferme la conduite tubulaire (52) ayant la section transversale intérieure la plus grande, et une deuxième position, dans laquelle la soupape ouvre la conduite tubulaire, et en ce que le vase de retenue (50, 70, 88) est disposé de telle façon dans la conduite tubulaire, que le niveau de lait se situe environ à la hauteur du raccordement de la canalisation ascendante (5) avec le lactoduc (6) situé en hauteur.

14. Installation selon la revendication 13, caractérisée en ce que le canal d'évacuation est formé par une première ouverture (60) et une deuxième ouverture (61) ouverte lorsque la soupape (57) est fermée et fermée lorsque la soupape est ouverte.

15. Installation selon la revendication 13 ou 14, caractérisée en ce que le flotteur peut être fixé de manière amovible, dans sa première et sa deuxième position, sous la forme d'un élément bistable, à l'aide d'aimants (63, 62, 64, 65).

16. Installation selon l'une des revendications 13 à 15, caractérisée en ce que la section transversale du canal d'écoulement (60, 61) est réglable.

17. Installation selon l'une des revendications 14 à 16, caractérisée en ce que la section transversale de la première ouverture (60) du canal d'écoulement est réglable à l'aide d'un manodétendeur (66).

18. Installation selon l'une des revendications 13 à 17, caractérisée en ce que le trop-plein (59) et le canal d'écoulement (60, 61) du vase de retenue du lait (50), ainsi que la conduite tubulaire (52) ayant la section transversale intérieure la plus large, débouchent dans une conduite tubulaire ascendante commune (52).

19. Installation selon l'une des revendications 13 à 18, caractérisée en ce que le corps (57) de la soupape est lié rigidement au flotteur (55).

20. Installation selon l'une des revendications 13 à 18, caractérisée en ce qu'il est prévu un interrupteur à action rapide (80) ou un interrupteur de contact qui sont actionnés en fonction de la position du flotteur (71) et qui, lorsque ce flotteur dépasse ou au contraire reste en dessous d'un certain niveau déterminé au préalable, basculent d'une première vers une deuxième position et inversement, afin de commander la soupape (76, 77) qui s'ouvre ou se ferme.

21. Installation selon l'une des revendications 13, 14 ou 16 à 20, caractérisée en ce que la soupape se présente sous la forme d'une membrane (77) à commande pneumatique.

22. Installation selon l'une des revendications 13 à 21, caractérisée en ce que la conduite tubulaire (68) ayant la section transversale intérieure la plus grande fait saillie dans le vase de retenue du lait (70) sous la forme d'une canalisation ascendante ouverte à l'extrémité supérieure (76), et en ce que le trop-plein et le canal d'évacuation se présentent sous la forme d'une fente (74) se prolongeant longitudinalement sur la paroi intérieure du vase de retenue du lait (70) et ayant une section transversale qui correspond au moins à la somme des sections transversales intérieures des conduites tubulaires (68, 69) ayant les sections transversales la plus grande et la plus petite.

23. Installation selon la revendication 6, caractérisée en ce qu'il est prévu deux conduites tubulaires (86, 87, 89, 90) ayant de préférence des sections transversales intérieures différentes, en ce qu'il existe un vase de retenue du lait (88) dans le-

27  **0 075 255**  28

quel font saillie les deux conduites tubulaires (86, 87) sous la forme de canalisations ascendantes ouvertes à l'extrémité supérieure, en ce qu'il est prévu deux canaux d'évacuation ayant des sections transversales qui correspondent respectivement à celles des conduites tubulaires (89, 90) ayant la section transversale intérieure la plus réduite et la plus large, en ce qu'il existe un flotteur (94) qui est couplé avec une première soupape installée à l'extrémité supérieure de la conduite tubulaire (86) ayant la section transversale intérieure la plus large, et avec une deuxième soupape située au niveau du canal d'évacuation dont la section transversale est la plus large, de telle sorte que la première et la seconde soupape s'ouvrent ou se ferment en fonction du niveau de lait dans le vase de retenue (88), et en ce que le vase de retenue du lait (88) est disposé de telle sorte dans la canalisation ascendante que le niveau de retenue du lait se situe environ à la hauteur du raccordement de la canalisation ascendante (5) avec le lactoduc (6) situé en hauteur.

24. Installation selon la revendication 23, caractérisée en ce que la première et la seconde soupape présentent des éléments de fermeture (97, 98) qui sont supportés par une tige (96) commune, réglable en fonction de la position du flotteur (94).

25. Installation selon la revendication 6, caractérisée en ce qu'il est prévu deux conduites tubulaires (106, 107) de sections transversales de préférence différentes, dans lesquelles est branché un lacto-débitmètre électronique commun (108), en ce que la conduite tubulaire (107) ayant la section transversale intérieure la plus large, comporte, en amont et/ou en aval du lacto-débitmètre, une soupape (109, 111, 110, 112) qui se ferme ou s'ouvre en fonction du débit de lait mesuré, et en ce qu'un lacto-débitmètre provoquant une certaine retenue du lait est disposé de telle sorte dans la canalisation ascendante, que le niveau de retenue du lait se situe environ à la hauteur du raccordement de la canalisation ascendante avec le lactoduc (6) situé en hauteur.

Fig. 1

Fig.2

Fig.3

Fig.4

9

8

Fig.5

10

11

Fig.6

14

15

12

13

Fig.7

18

20

21

19

16

17

Fig.8

IX

22

23

26

27

25

31

30

24

IX

Fig.9

23

22

24

35

32

33

26

34

Fig.10

Fig.11

Fig.12

Fig.13

**Fig.14**

**Fig.15**

Fig.16